(19) Europäisches Patentamt
European Patent Office
Office européen des brevets

(11) **EP 1 217 260 B1**

(12) **EUROPÄISCHE PATENTSCHRIFT**

(45) Veröffentlichungstag und Bekanntmachung des Hinweises auf die Patenterteilung:
**26.03.2003  Patentblatt 2003/13**

(51) Int Cl.⁷: $F16H\ 55/38$, $C25D\ 5/48$

(21) Anmeldenummer: **01129291.9**

(22) Anmeldetag: **13.12.2001**

(54) **Riemenscheibe mit mikroprofilierter Oberfläche**

Pulley with micro-profiled surface

Poulie à surface micro-profilée

(84) Benannte Vertragsstaaten:
**DE IT**

(30) Priorität: **21.12.2000  DE 10064057**

(43) Veröffentlichungstag der Anmeldung:
**26.06.2002  Patentblatt 2002/26**

(73) Patentinhaber: **Wacker-Chemie GmbH
81737 München (DE)**

(72) Erfinder: **Lukschandel, Jörg
87439 Kempten (DE)**

(74) Vertreter: **Potten, Holger et al
Wacker-Chemie GmbH
Zentralabteilung Patente,
Marken und Lizenzen
Hanns-Seidel-Platz 4
81737 München (DE)**

(56) Entgegenhaltungen:
**EP-A- 0 285 729        DE-C- 475 398**

- **PATENT ABSTRACTS OF JAPAN vol. 012, no. 160 (M-697), 14. Mai 1988 (1988-05-14) & JP 62 278353 A (MITSUBOSHI BELTING LTD), 3. Dezember 1987 (1987-12-03)**
- **PATENT ABSTRACTS OF JAPAN vol. 018, no. 490 (C-1249), 13. September 1994 (1994-09-13) & JP 06 158264 A (NIPPON ALUM CO LTD), 7. Juni 1994 (1994-06-07)**
- **PATENT ABSTRACTS OF JAPAN vol. 2000, no. 02, 29. Februar 2000 (2000-02-29) & JP 11 323459 A (HITACHI METALS LTD), 26. November 1999 (1999-11-26)**

**Beschreibung**

Riementriebe gehören zu den ältesten technischen Lösungen zur Übertragung von Drehbewegungen. Anfangs waren nur Naturprodukte verfügbar, die "Riemen" bestanden aus Faserseilen oder Leder, die Scheiben aus Holz. Zur Erhöhung der Reibung zwischen Riemen und Scheibe bewährte sich das Auftragen von Pech.

In modernen stärkeren Riementrieben kommen fast ausschließlich metallische Riemenscheiben zum Einsatz, die insbesondere bei Flachriementrieben zur Reibungserhöhung mit Gummi o.ä. oder auch mit groben Hartstoffpartikel enthaltenen Beschichtungen belegt werden. Riemenscheiben können ungeteilt oder geteilt sein. Geteilte Riemenscheiben sind beispielsweise aus stufenlos verstellbaren Riementrieben bekannt.

Hochtourige Riementriebe werden überwiegend als Keilriementriebe ausgelegt. Die Scheiben bestehen in aller Regel aus Grauguß, die Riemen sind mehrlagig mit dehnungsarmen Gewebestreifen und Deckschichten aus Elastomeren.

Elastomere als Riemenoberfläche sind deshalb besonders vorteilhaft, weil der bei Riemenumlenkung auftretende Dehnschlupf größtenteils durch elastische Verformung in der Deckschicht und weniger durch tatsächliches Durchrutschen im Kontaktbereich zur Scheibe abgebaut wird.

Für das Durchrutschen des Riemens auf der Scheibe gilt die sog. Eytelwein'sche Gleichung

$$F_1 = F_2 \cdot e^{\mu\alpha}$$    (vgl. Niemann-Winter "Maschinenelemente" Bd. III, S. 154 bis 156, Springer Verlag, 1983).

In der Praxis sind durch die vorgegebene konstruktive Auslegung des Riementriebs alle Größen außer dem Reibungskoeffizienten μ als konstant anzusehen. Diesem kommt daher für die Leistungsfähigkeit eines Riementriebs erhebliche Bedeutung zu.

Die Scheiben für Riementriebe, beispielsweise im Motorenbau, sind in aller Regel fliegend auf den zugehörigen Wellen montiert, was zu einer hohen, nicht zu vermeidenden Biegebelastung der Welle im Lager führt. Mit steigender Drehzahl wirken auf den umgelenkten Riemen beträchtliche Fliehkräfte, die durch Riemenspannsysteme kompensiert werden müssen, um ein Durchrutschen des Riemens zu verhindern.

Im Neuzustand weist die Riemenscheibe typischerweise eine durch spangebende Bearbeitung bedingte Oberflächenrauheit auf. Die Rauheitsspitzen greifen in die nachgebende Oberfläche des Riemens ein und verhindern weitgehend eine Relativbewegung während der Dehnschlupf-Phase. Mit zunehmender Betriebsdauer findet jedoch eine Glättung der Scheibenoberfläche statt, die an bereits gelaufenen Riemenscheiben durch das glänzende Erscheinungsbild für jedermann deutlich erkennbar ist. Als Folge dieser Glättung nimmt der Reibungskoeffizient μ ab, so daß zur Aufrechterhaltung eines sicheren Betriebs eine hohe Riemenvorspannung erforderlich ist. Hochtourige und leistungsstarke Riementriebe müssen daher mit verstärkten Lagern und hochfesten Riemen ausgelegt werden.

Wie oben erwähnt, ist bei gegebenen konstruktiven und dynamischen Größen eine Einflußnahme auf die Funktion des Riementriebs nur über den Reibungskoeffizienten möglich. Im physikalischen Sinn kann von einem Reibungskoeffizienten zwischen Scheibenoberfläche und Riemen erst nach Eintritt der verschleißbedingten Glättung der Scheibenoberfläche gesprochen werden. Davor ist er durch Verzahnung von Rauheitsspitzen der Scheibenoberfläche mit der Elastomer-Schicht des Riemens überlagert, was zu höheren Reibungskräften führt.

Es wäre von großem Vorteil, die Oberflächentopografie der Riemenscheibe so zu gestalten, daß nicht nur im Neuzustand, sondern über die gesamte Betriebszeit ein gleichbleibend hoher Reibwert sichergestellt werden könnte, ohne daß der Riemen unzulässig in Mitleidenschaft gezogen wird. Dadurch wäre es möglich, die erforderliche Riemenspannung in einer gegebenen Anordnung zu reduzieren und den gesamten Riementrieb leichter auszulegen. Das würde Kosten, Gewicht, Antriebsenergie und Platz sparen.

DE 475 398 offenbart einen Belag für eine Riemenscheibe. Dieser Belag besteht aus Metallteilchen, vorzugsweise Hart- oder Stahlguss, die auf der Oberfläche befestigt werden.

Aufgabe der vorliegenden Erfindung ist es, eine Riemenscheibe mit verbesserten Eigenschaften zur Verfügung zu stellen.

Diese Aufgabe wird durch eine Riemenscheibe gemäß Anspruch 1 gelöst.

Eine Dispersionsbeschichtung bestehend aus einem Dispergat und einer Matrix ist dadurch gekennzeichnet, daß das Dispergat als Feststoff mit einer Partikelgröße vorliegt, die um ein Vielfaches kleiner ist, als die Schichtdicke der Matrix.

Die Dispersionsbeschichtung weist definierte Rauheitsspitzen zur Erzielung eines Mikro-Formschlusses mit üblichen Riemenoberflächen auf. Sie erfährt auch bei Abnützung keine Veränderung dieser Topografie und verursacht keine unzulässige Schädigung des Riemens.

Bei der Matrix handelt es sich besonders bevorzugt um Nickel oder eine Nickellegierung.

Die Hartstoffpartikel sind vorzugsweise ausgewählt aus der Gruppe der Oxide, Karbide, Nitride und Diamant, wobei es sich bei den Oxiden vorzugsweise um Oxide von Al, Zr, oder Cr, handelt, bei den Karbiden vorzugsweise um Karbide von Si, Bi, oder Ti und bei den Nitriden vorzugsweise um Nitride von Si, oder hexag. BN.

Die Größe der in der Beschichtung dispergierten Partikel spielt für die erzielbare Kraftübertragung und die notwendige Schonung der Riemenoberfläche eine entscheidende und gegenläufige Rolle. Der Streubereich liegt bei einem mittleren Durchmesser von 2 µm vorzugsweise bei 0,1 bis 4 µm.

Die Schichtdicke der Dispersionsbeschichtung auf der Riemenscheibe ist vorzugsweise um ein Mehrfaches größer als der Partikeldurchmesser der dispergierten Phase.

Vorzugsweise ist die Schichtdicke der Dispersionsbeschichtung um ein 5 bis 20 faches, besonders bevorzugt um ein 10 bis 15 faches größer als der Partikeldurchmesser.

Die Partikel liegen in der Dispersionsschicht vorzugsweise in einer Menge von 15 bis 30 Vol. %, bevorzugt von 20 bis 25 Vol. % vor.

Damit ist sichergestellt, daß auch bei fortschreitender Abnützung der Dispersionsbeschichtung immer wieder neue Partikel zum Vorschein kommen und als Rauheitsspitzen aus der Oberfläche der Dispersionsbeschichtung hervorstehen.

Eine einphasige Schicht läßt sich zwar ebenfalls mit einer geeigneten Oberflächenstruktur im Neuzustand abscheiden, sie wird aber durch Verschleiß geglättet und verlieren ihre Wirkung. Sie bietet daher nicht die Vorteile einer erfindungsgemäßen Beschichtung.

Eine erfindungsgemäße Riemenscheibe kann ungeteilt oder geteilt ausgeführt sein.

Die Erfindung betrifft ferner einen Riementrieb umfassend eine Riemenscheibe und einen Riemen, dadurch gekennzeichnet, daß als Riemenscheibe eine erfindungsgemäße Riemenscheibe eingesetzt wird.

Die Erfindung betrifft auch die Herstellung einer erfindungsgemäßen Riemenscheibe. Die erfindungsgemäßen Riemenscheiben werden vorzugsweise durch Beschichtung einer üblichen Riemenscheibe mittels eines an sich bekannten Beschichtungverfahrens hergestellt. Vorzugsweise wird die Dispersionsbeschichtung (Hartstoff/Metallschicht) mittels eines galvanotechnischen Verfahrens, z. B. einer außenstromlosen (= chemischen) Vernickelung erzeugt. Die gemeinsame Abscheidung von Metallen und Feststoffpartikeln ist in der Galvanotechnik verbreitet und bekannt. Dies gilt insbesondere für die Kombination Nickel/Siliziumkarbid. Nickel wird entweder elektrolytisch oder außenstromlos ("chemisch" ) als Nickel-Phosphor-Legierung abgeschieden.

Elektrolytische Dispersionsschichten werden im allgemeinen mechanisch nachbearbeitet, weil sie nicht konturgetreu aufwachsen und häufig auch eine unzulässige Rauhigkeit aufweisen. Chemisch abgeschiedene Schichten wachsen zwar um eine Größenordnung langsamer, dafür geben sie auch komplizierte Bauteilformen exakt wieder und lassen sich durch Wärmebehandlung zusätzlich aushärten. Eine formgebende Nachbearbeitung ist nicht erforderlich.

Vorzugsweise erfolgt die Herstellung der Dispersionsbeschichtung daher durch außenstromlose (chemische) Abscheidung einer Nickel-Phosphor-Legierung mit Einlagerung einer entsprechenden Hartstoffkörnung.

Vorzugsweise wird dabei zunächst eine zur Herstellung einer erfindungsgemäßen Riemenscheibe verwendete übliche Riemenscheibe im Kontakbereich zum Riemen z. B. mit Glasperlen gestrahlt, um etwaige Fertigungseinflüsse auszuschalten.

Danach erfolgt in an sich bekannter Weise eine Dispersionsbeschichtung durch außenstromlose (chemische) Abscheidung einer Nickel-Phosphor-Legierung mit Einlagerung der entsprechenden Hartstoffkörnung.

Vorzugsweise wird daran anschließend die mit der Dispersionsbeschichtung versehene Riemenscheibe zur Erzielung einer größtmöglichen Verschleißbeständigkeit in an sich bekannter Weise wärmebehandelt. Dies geschieht beispielsweise durch ein Erwärmen auf 350°C für 2 Stunden

Vorzugsweise werden anschließend lose anhaftende Partikel durch sanftes Strahlen mit Glasperlen entfernt.

Die folgenden Beispiele dienen der weiteren Erläuterung der Erfindung.

Beispiel 1: Herstellung einer erfindungsgemäßen Reimenscheibe

Eine neue Riemenscheibe für eine Druckluftbeschaffungsanlage an einem landwirtschaftlichen Schlepper (siehe Beispiel 4) wurde wie folgt behandelt:

- Strahlen mit Glasperlen von 40 bis 80 µm Durchmesser bei einem Strahldruck von 2 bar zur Einebnung der Drehriefen in der Kontaktfläche zwischen Riemenscheibe und Riemen.
- Aufnehmen der Scheibe unter Abdichtung der Paßfläche zur Kompressorwelle.
- Einhängen der gesamten Aufnahme in das Transportsystem eines für die chemische Dispersionsbeschichtung eingerichteten Galvanikautomaten.
- Durchführung der auf den Werkstoff Grauguß abgestimmten chemischen Vorbehandlung durch Entfetten 20 min. bei 80°C, Beizen 2 min. $H_2SO_4$ Beize 40°C und Aktivieren 2 min. in Säuregemisch bei 30°C mit den dazwischenliegenden Spülschritten.
- Eintauchen in ein Chemisch Nickel Bad der Type NL 65 (erhältlich bei der Firma Shipley, Stuttgart), in dem pro Liter 10 Gramm Siliziumkarbidpulver mit einer mittleren Partikelgröße von 2 µm dispergiert waren.
- Abscheiden der Nickel-SiC-Dispersionsschicht über 2 Stunden mit einer Gesamtschichtdicke von 27 µm.

- Ultraschallspülen, Entnehmen der Scheibe aus dem Warenträger.
- Wärmebehandeln der Scheibe über 2 Stunden bei 350°C.
- Nach dem Abkühlen mechanisches Entfernen noch lose anhaftender Siliziumkarbidpartikel durch Strahlen mit Glasperlen bei 0,8 bar Strahldruck.

Beispiel 2: Bestimmung des Einflusses der Partikelgröße der Dispersionsbeschichtung

Es wurden Keilriemenscheiben mit Dispersionsschichten unterschiedlicher Partikelgröße analog Beispiel 1 belegt und jeweils Dauerlauftests unterzogen, um das Ausmaß der Riemenschädigung zu ermitteln. Die Kontaktflächen der Scheiben wurden wie in Beispiel 1 beschreiben vor der Beschichtung durch Strahlen mit Glasperlen homogenisiert, um den Einfluß etwaiger Unterschiede der vorausgegangenen spangebenden Bearbeitung zu eliminieren. Als Dispergat wurde wegen der einfachen Verfügbarkeit Siliziumkarbid gewählt, als Dispersionsmittel (Matrix) wurde außenstromlos abgeschiedenes Nickel gewählt.

Die Konzentration des Dispergats betrug bei der Körnung 1 μm 18 Vol. %, bei den übrigen 25 ± 3 Vol. %.

Die Tests wurden über 100 Stunden bzw. bis zur Zerstörung des Riemens gefahren. Nach jeweils 24 Stunden wurden Scheiben und Riemen optisch bei 15-facher Vergrößerung beurteilt. Die Ergebnisse sind in der Tabelle 1 wiedergegeben.

Die darin angegebenen Schädigungsstufen bedeuten:

Für die Scheibe (S)   0 = unverändert
                      1 = leicht geglättet
                      2 = poliert
                      3 = eingelaufen
                      4 = stark eingelaufen

Für den Riemen (R)    0 = unverändert
                      1 = geglättet
                      2 = aufgerauht
                      3 = rissig, stark aufgerauht
                      4 = zerstört

Tabelle 1:

| Verträglichkeit verschiedener Partikelgrößen in Dispersionsschichten mit Riemenoberflächen | | | | | | | | | |
|---|---|---|---|---|---|---|---|---|---|
| **Korn** | **Streubereich** | **24 Std.** | | **48 Std.** | | **72 Std.** | | **100 Std.** | |
| | | **S** | **R** | **S** | **R** | **S** | **R** | **S** | **R** |
| 1 μm | 0 - 2 μm | 1 | 0 | 2 | 0 | 2 | 1 | 2 | 1 |
| 2 μm | 1 - 4 μm | 1 | 0 | 1 | 0 | 1 | 0 | 1 | 0 |
| 4 μm | 2 - 6 μm | 0 | 0 | 0 | 1 | 1 | 2 | 1 | 3 |
| 8 μm | 5 - 12 μm | 0 | 3 | 0 | 4 | - | - | - | - |

Für die weiteren Versuche wurden nur noch Partikel mit 2 μm mittlerem Durchmesser herangezogen.

Beispiel 3: Bestimmung des Einflusses des Partikelmaterials

Aus handelsüblichen Hartstoffpulvern wurden durch Sedimentationstrennung Körnungen hergestellt, die dem im ersten Abschnitt eingesetzten Siliziumkarbid mit 2 μm mittlerer Korngröße entsprachen. Ausgewählt wurden aus der Gruppe der Oxide Aluminiumoxid (Korund), aus der Gruppe der Karbide Siliziumkarbid und Borkarbid und Diamant.

Die Beschichtung erfolgte wie in Beispiel 1 beschreiben, wobei statt der dort genannten SiC Körner jeweils eine der vorgenannten Körnungen eingesetzt wurde.

Die mit den verschiedenen Hartstoffschichten belegten Riemenscheiben wurden zur Erzielung einer größtmöglichen Verschleißbeständigkeit der Schichten 2 Stunden bei 350°C wärmebehandelt.

Lose anhaftende Partikel wurden anschließend durch sanftes Strahlen mit Glasperlen mit 40 bis 80 μ Durchmesser (= handelsüblich) und einem Druck von 0.8 bar entfernt.

Die Scheiben wurden einem Dauerlauftest mit passenden Keilriemen unterzogen. Zu Versuchsbeginn sowie nach 100, 250 und 500 Stunden wurden die Kontaktflächen der Scheiben und Riemen optisch bei 15-facher Vergrößerung beurteilt, zusätzlich wurde der Reibungskoeffizient bei einem Umschlingungswinkel von 120° aus dem Verhältnis Antriebs-/Abtriebskraft mit Hilfe der umgeformten Eytelwein'schen Gleichung als

$$\mu = \ln \left( \frac{F_1}{F_2} : \alpha \right)$$

errechnet.

Die Ergebnisse sind in Tabelle 2 wiedergegeben. Die Schädigungsstufen entsprechen Tabelle 1.

Tabelle 2:

| Verträglichkeit und Reibungsverhalten verschiedener Hartstoffe in Dispersionsschichten und Riemenoberflächen | | | | | | | | | | | |
|---|---|---|---|---|---|---|---|---|---|---|---|
| Hartstoff 2 μm | Neu | | | 100 | | | 250 | | | 500 Stunden | | |
| | S | R | μ | S | R | μ | S | R | μ | S | R | μ |
| unbeschichtet | O | O | 0,52 | 2 | 0 | 0,34 | 3 | 1 | 0,28* | 4 | 3 | 0,29* |
| Al$_2$O$_3$ | - | - | 0,61 | 1 | 1 | 0,58 | 1 | 1 | 0,56 | 2 | 2 | 0,54 |
| SiC | - | - | 0,65 | 1 | 1 | 0,62 | 1 | 1 | 0,60 | 2 | 2 | 0,58 |
| B$_4$C | - | - | 0,64 | 1 | 1 | 0,60 | 1 | 1 | 0,55 | 3 | 2 | 0,48 |
| Diamant | - | - | 0,72 | 0 | 1 | 0,70 | 0 | 2 | 0,71 | 0 | 3 | 0,69 |

* Auftreten von Pfeifgeräuschen

Wie aus Tab. 2 ersichtlich führen Dispersionsschichten generell zu höheren Reibwerten. Der deutliche Abfall des Reibungskoeffizienten bei unbeschichteter Scheibe (1. Zeile) bereits nach kurzer Laufzeit zeigt klar, daß in herkömmlichen Riementrieben die Riemenspannung von vornherein sehr hoch gewählt werden muß, um ausreichende Sicherheit bei der geforderten Kraftübertragung zu gewährleisten. Der hier infolge niedriger Reibung größere Schlupf bewirkt zudem eine stärkere Erwärmung des Riemens, die zur Ausbildung von Rissen bei längerer Laufzeit führt.

Dispersionsbeschichtete Riemenscheiben verlieren dagegen auch bei längeren Laufzeiten nur geringfügig an Griffigkeit, ohne daß eine unzulässige Schädigung der Riemenoberfläche zu beobachten ist. Eine Ausnahme bildet Diamant als Dispergat, der zwar die höchsten Reibwerte ergibt, aber bei den Versuchen eine stärkere Riemenschädigung verursachte. Bei besonders hohen Anforderungen an den Riementrieb unter Inkaufnahme einer kürzeren Riemenlebensdauer könnte jedoch auch Diamant ein Dispergat der ersten Wahl sein.

Die Beispiele belegen klar, daß Riemenscheiben mit dispersionsbeschichteten Laufflächen entsprechend der vorliegenden Erfindung einen erheblichen technischen Fortschritt darstellen: Riementriebe unter Verwendung derartiger Scheiben können leichter ausgelegt werden und sparen Materialkosten, Gewicht und Antriebsenergie. Dadurch können die Mehrkosten für die Beschichtung mindestens kompensiert werden. Zusätzlich wird das Auftreten von Pfeif- und Quietschgeräuschen, die insbesondere im PKW-Bereich als äußerst störend empfunden werden, sicher verhindert.

Beispiel 4: Einsatz einer erfindungsgemäßen Riemenscheibe

Um das Verhalten eines Riementriebs mit dispersionsbeschichteten Scheiben im Feldversuch unter möglichst ungünstigen Verhältnissen zu prüfen, wurde als praktischer Einsatzfall der Antrieb einer Druckluftbeschaffungsanlage an einem landwirtschaftlichen Schlepper ausgewählt. Bei diesem Antrieb kam es kurz vor Erreichen des Enddrucks von 11,5 bar regelmäßig zu Pfeifgeräuschen infolge Durchrutschen des Riemens. Landwirtschaftliche Maschinen sind typischerweise starker Verschmutzung und damit einer erhöhten Verschleißbeanspruchung ausgesetzt, so daß dem gewählten Beispiel hohe Aussagekraft zukommt.

Die am Druckluftkompressor sitzende Scheibe wird über 2 Keilriemen von der Kurbelwelle angetrieben. Üblicherweise wird die Riemenspannung nach jeweils ca. 100 Betriebsstunden korrigiert, trotzdem kommt es regelmäßig zu den erwähnten Quietschgeräuschen. Es wurde eine neue Riemenscheibe beschafft und wie in Beispiel 1 beschrieben behandelt. Die so behandelte Scheibe wurde auf der Welle des Druckluftkompressors an einem Schlepper der Type FENDT 312 LSA montiert. 2 neue Keilriemen wurden aufgelegt und gemäß Betriebsanleitung gespannt. Der Schlepper wurde wie üblich betrieben, nach jeweils ca. 200 Betriebsstunden wurden die Laufflächen von Scheibe und Riemen optisch begutachtet und die Riemenspannung kontrolliert.

Während der gesamten Beobachtungsdauer von 1040 Stunden traten keine Pfeifgeräusche auf. Riemen und Scheiben zeigten keine Verschleißerscheinungen. Es war während des gesamten Zeitraums kein Nachspannen der Riemen erforderlich.

## Patentansprüche

1. Riemenscheibe, die eine verschleißbeständige Dispersionsbeschichtung auf ihrer Oberfläche besitzt, wobei die Dispersionsbeschichtung als Matrix ein Metall oder eine Metallegierung enthält und das Dispergat aus mineralischen Partikeln, vorzugsweise aus Hartstoffpartikeln besteht, **dadurch gekennzeichnet, daß** die Partikel einen mittleren Durchmesser von 2 μm haben.

2. Riemenscheibe gemäß Anspruch 1, **dadurch gekennzeichnet, daß** die Schichtdicke der Dispersionsbeschichtung um ein 5 bis 20 faches, besonders bevorzugt um ein 10 bis 15 faches größer ist als der Partikeldurchmesser.

3. Verfahren zur Herstellung einer Riemenscheibe gemäß Anspruch 1 oder 2, **dadurch gekennzeichnet, daß** eine übliche Riemenscheibe mittels eines an sich bekannten galvanotechnischen Beschichtungverfahrens hergestellt wird.

4. Verfahren gemäß Anspruch 3, **dadurch gekennzeichnet, daß** als galvanotechnisches Beschichtungsverfahren die außenstromlose (chemische) Abscheidung einer Nickel-Phosphor-Legierung mit Einlagerung der entsprechenden Hartstoffkörnung verwendet wird.

5. Verfahren gemäß Anspruch 3 oder 4, **dadurch gekennzeichnet, daß** die mit der Dispersionsbeschichtung versehene Riemenscheibe zur Erzielung einer größtmöglichen Verschleißbeständigkeit in an sich bekannter Weise wärmebehandelt wird.

6. Riementrieb umfassend eine Riemenscheibe und einen Riemen, **dadurch gekennzeichnet, daß** die Riemenscheibe eine Riemenscheibe gemäß Anspruch 1 oder 2 ist.

## Revendications

1. Poulie, possédant sur sa surface un revêtement en dispersion résistant à l'usure, le revêtement en dispersion contenant, comme matrice, un métal ou un alliage métallique et le dispersant se composant de particules minérales, de préférence de particules dures, **caractérisée en ce que** les particules ont un diamètre moyen de 2 μm.

2. Poulie selon la revendication 1, **caractérisée en ce que** l'épaisseur de couche du revêtement en dispersion est 5 à 20 fois, particulièrement préférablement 10 à 15 fois supérieure au diamètre des particules.

3. Procédé de fabrication d'une poulie selon la revendication 1 ou 2, **caractérisé en ce qu'**une poulie usuelle est fabriquée au moyen d'un procédé de revêtement galvanotechnique connu en soi.

4. Procédé selon la revendication 3, **caractérisé en ce que** l'on utilise comme procédé de revêtement galvanotechnique le dépôt sans courant (chimique) d'un alliage de nickel-phosphore avec insertion des granules dures correspondantes.

5. Procédé selon la revendication 3 ou 4, **caractérisé en ce que** la poulie pourvue du revêtement en dispersion est soumise à un traitement thermique connu en soi pour l'obtention d'une résistance à l'usure aussi importante que possible.

6. Transmission à courroie comprenant une poulie et une courroie, **caractérisée en ce que** la poulie est une poulie selon la revendication 1 ou 2.

**Claims**

1. Pulley which has a wear-resistant dispersion coating on its surface, the dispersion coating containing a metal or a metal alloy as matrix and the dispersed substance consisting of inorganic particles, preferably of hard-material particles, **characterized in that** the particles have a mean diameter of 2 μm.

2. Pulley according to Claim 1, **characterized in that** the layer thickness of the dispersion coating is 5 to 20 times, particularly preferably 10 to 15 times, greater than the particle diameter.

3. Process for producing the pulley according to Claim 1 or 2, **characterized in that** a conventional pulley is produced by means of an electrodeposition coating process which is known per se.

4. Process according to Claim 3, **characterized in that** the electrodeposition coating process used is the deposition without external current (chemical deposition) of a nickel-phosphorus alloy with the corresponding incorporation of a suitable hard-material grain fraction.

5. Process according to Claim 3 or 4, **characterized in that** the pulley which has been provided with the dispersion coating is heat-treated in a manner known per se in order to achieve a maximum possible resistance to wear.

6. Belt drive comprising a pulley and a belt, **characterized in that** the pulley is the pulley according to Claim 1 or 2.